# EUROPEAN PATENT SPECIFICATION

(11) **EP 4 415 981 B1**
(45) Date of publication and mention of the grant of the patent: **09.12.2026**
(21) Application number: 22881920.7
(22) Date of filing: 07.10.2022
(51) Int. Cl.: B60C 11/12, B60C 11/03, B60C 11/13

(54) **BI-DIRECTIONAL SIPE AND/OR SLOT**
BIDIREKTIONALE LAMELLE UND/ODER SCHLITZ
LAMELLE ET/OU FENTE BIDIRECTIONNELLE

(30) Priority: 16.10.2021 US 202163256543 P
(43) Date of publication of application: 21.08.2024
(60) Divisional application: 26213465.3 / 4 847 276
(73) Proprietor: Bridgestone Americas Tire Operations, LLC, Nashville, TN 37201 (US)
(72) Inventor: SEVERYN, David M., Akron, Ohio 44317 (US); WISCHT, JR., Paul J., Akron, Ohio 44317 (US)
(74) Representative: Marks & Clerk LLP
(86) International application number: PCT/US2022/077735
(87) International publication number: WO 2023/064705

(56) References cited:
- WO-A1-2013/002801
- JP-A- 2004 330 812
- US-A1- 2001 022 209
- US-A1- 2012 227 883
- US-A1- 2012 227 883
- US-A1- 2019 176 528
- US-A1- 2019 359 002
- US-A1- 2020 180 363

## Description

### BACKGROUND

Tires are often designed to optimize performance in a variety of road conditions. For example, an all-weather tire may include tread features that are designed to optimize performance in dry road conditions, wet road conditions, and snow-covered/icy road conditions.

Obtaining traction in snow and ice is often achieved by providing "biting edges" in the tread of the tire. These "biting edges" are often in the form of sipes or slots. However, too many sipes or slots can lead to a loss of tread block or rib stiffness, which may be undesirable in the performance optimization of the tire, particularly in dry roadway conditions.

Attention is drawn to US 2012/227883 A1 which discloses a tire tread having at least two wearing layers, provided with at least one continuous groove having, in the as-new condition, a plurality of external cavities opening onto the tread surface and a plurality of internal cavities placed radially and completely inside the tread surface. The difference between the mean lengths of the internal cavities and of the external cavities is at most equal to 20% of the longest mean length. The difference in the mean cross-sectional areas of the internal and external cavities is at most equal to 20% of the largest mean area. Each external cavity of a continuous groove is connected to at least two internal cavities of the same groove and has a plurality of incisions opening onto the tread surface, each connecting two consecutive external cavities of the same groove, at least two connecting channels and at least one internal cavity.

Attention is also drawn to US 2020/180363 A1 which discloses a tread for a heavyduty vehicle tire having a total thickness corresponding to the thickness of material to be worn away during running. This tread has, in the new state, a tread surface intended to come into contact with a roadway when running. The tread comprises at least one hidden cavity forming a new groove opening onto the tread surface after a predetermined amount of partial wear. The cavity comprises two opposite lateral walls connected together by a bottom part radially towards the inside and by crown part radially towards the outside. The crown part is provided with a plurality of fine grooves extending radially towards the outside from crown part delimiting the cavity and extending in a direction that makes an angle at least equal to 40 degrees with the main direction of cavity.

Attention is also drawn to US 2019/359002 A1 which discloses a tire having a tread portion. The tread portion includes a first shoulder land portion that is defined between a first shoulder main groove and a first tread end. The first shoulder land portion includes: a shoulder lateral groove that extends from the first tread end and ends in the first shoulder land portion; a first sipe that extends from an end of the shoulder lateral groove to the first shoulder main groove; and a second sipe that extends from the first tread end toward the first shoulder main groove, and ends in the first shoulder land portion. The length of the shoulder lateral groove in a tire axial direction is 0.10 to 0.30 times the width of the first shoulder land portion in the tire axial direction.

Accordingly, what is needed is a tire tread feature to balance snow and ice traction with dry roadway traction.

### SUMMARY

In one aspect, a tire is provided, the tire comprising: a tread portion comprising at least one of a tread rib or a tread block, a sipe included in the tread rib or the tread block, wherein the sipe includes a center section located axially between opposing outer sections, and wherein the center section and each outer section include a radially outer portion and a radially inner portion, wherein the radially outer portion of each outer section has a circumferential width WT1, wherein the radially outer portion of the center section has a circumferential width WT2, wherein the circumferential width WT1 is greater than the circumferential width WT2, wherein the radially inner portion of each outer section includes an axially outer portion having a radial depth DB1E and an axially inner portion having a radial depth DB1I, and wherein the radial depth DB1E is less than the radial depth DB1I.

[DELETED]

[DELETED]

### BRIEF DESCRIPTION OF THE DRAWINGS

The accompanying figures, which are incorporated in and constitute a part of the specification, illustrate various example aspects, and are used merely to illustrate various example aspects. In the figures, like elements bear like reference numerals.
**FIG. 1A** illustrates a perspective view of a tire tread **100** having a tread block **106** with a bi-directional sipe and/or slot **110.**
**FIG. 1B** illustrates a plan view of tire tread **100** having tread block **106** with bi-directional sipe and/or slot **110.**
**FIG. 1C** illustrates a perspective view of tread block **106** with a bi-directional sipe and/or slot **110.**
**FIG. 1D** illustrates a perspective view of half of tread block **106** with a bi-directional sipe and/or slot **110.**
**FIG. 1E** illustrates a perspective view of half of tread block 106 with a bi-directional sipe and/or slot **110.**
**FIG. 2A** illustrates a perspective view of a tire sipe blade **230** for forming a bi-directional sipe and/or slot.
**FIG. 2B** illustrates an elevation view of tire sipe blade **230** for forming a bi-directional sipe and/or slot.
**FIG. 2C** illustrates a cross-sectional view of a tire sipe blade **230** taken about a plane formed by reference line **A-A** in **FIG. 2B****.**
**FIG. 2D** illustrates a cross-sectional view of a tire sipe blade **230** taken about a plane formed by reference line **B-B** in **FIG. 2B****.**
**FIG. 2E** illustrates a cross-sectional view of a tire sipe blade **230** taken about a plane formed by reference line **C-C** in **FIG. 2B****.**
**FIG. 2F** illustrates a plan view of tire sipe blade **230** for forming a bi-directional sipe and/or slot.

### DETAILED DESCRIPTION

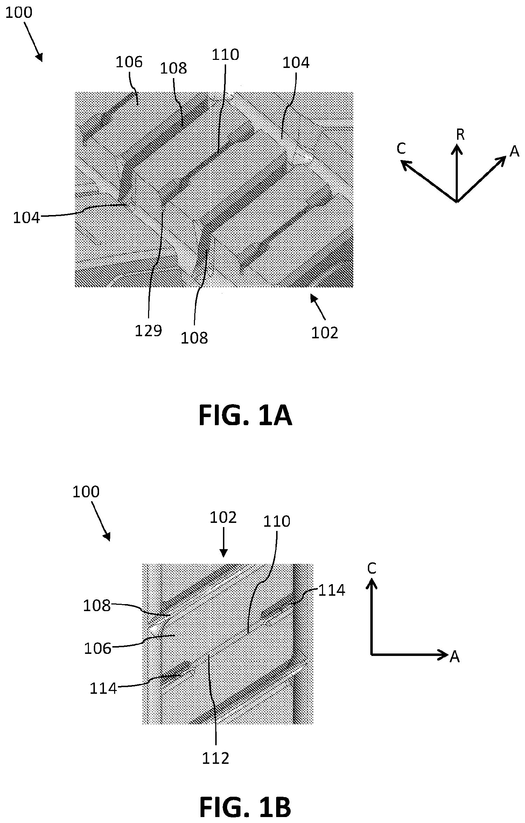

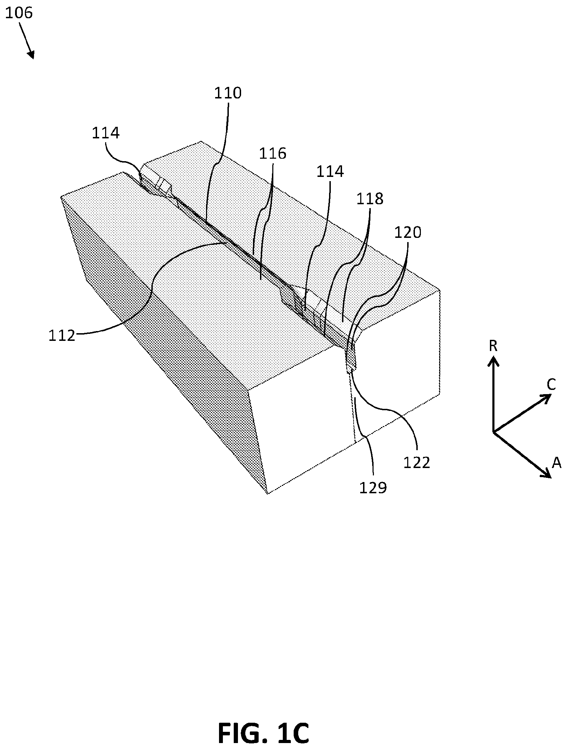

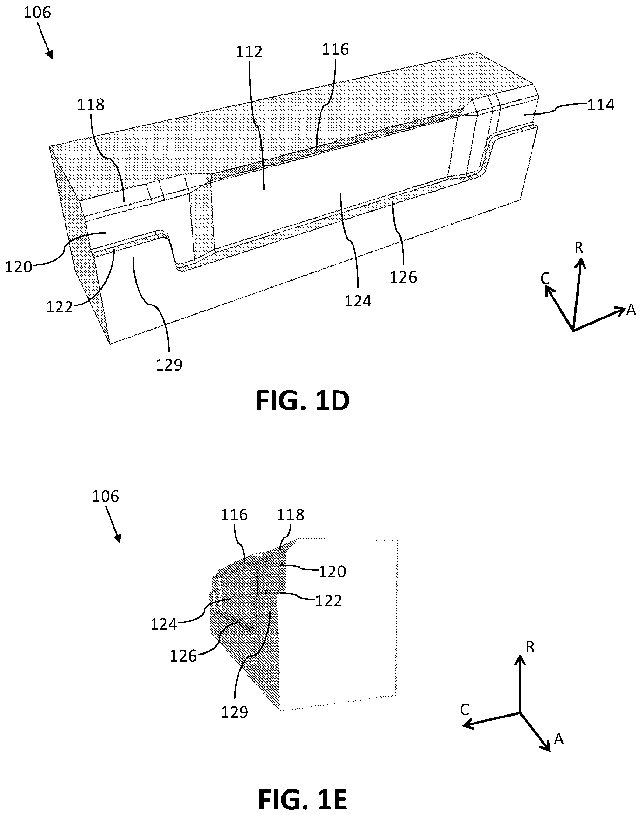

**FIGS. 1A-1E** illustrate a tire tread **100** having a tread block **106** with a bi-directional sipe and/or slot **110.** Tire tread **100** may be utilized on any of a variety of tires, including for example tires intended for use in both dry running surfaces and snow and icecovered running surfaces.

Axes and planes described herein are illustrated in **FIGS. 1A-1E****,** and include a circumferential axis **C** oriented in the circumferential direction of the tire, a radial axis **R** oriented in the radial direction of the tire, and an axial axis **A** oriented in the axial direction of the tire.

Tire tread **100** may include at least one block row **102** defined by parallel circumferential grooves **104.** Axial slots/sipes **108** may extend at least partially across block row **102** to define individual tread blocks **106.** At least one tread block **106** includes a bi-directional sipe and/or slot **110.** Alternatively, tire tread **100** may include at least tread rib in lieu or tread blocks, and the tread rib includes a bi-directional sipe and/or slot **110.**

Sipe/slot **110** includes a center section **112** located between (e.g., axially between) opposing outer sections **114.** Sipe/slot **110** includes opposing key edges **116** limited to center section **112.** Key edges **116** are a negative, or undercut angle with respect to the radial direction **R** at the radially outer surface, which results in block **106** having opposing, inwardly-facing acute angles at the radially outer portion.

Opposing key edges **116** result in a bi-directional (that is, the tire is not required to have a specific direction of rolling) that result in increased snow and ice traction. The bi-directional nature of opposing key edges **116** allows the tire to function as intended regardless of the rolling direction of the tire, such that an installer can mount the tire on the vehicle with the tread rolling either direction without tire performance degradation. Additionally, the bi-directional nature of opposing key edges **116** may provide a benefit in snow and ice traction both when the tire is accelerating and braking. That is, the acute angle key edge **116** "bites" into snow and ice surfaces to increase traction of the tire on those surfaces. The shape of key edge **116** is most easily viewed in **FIG. 1E****.**

Sipe/slot **110** includes opposing chamfered edges **118** limited to outer sections **114.** Chamfered edges **118** are a positive angle with respect to the radial direction **R** at the radial outer surface. That is, chamfered edge **118** are angled in the opposite direction as key edges **116.** The shape of chamfered edge **118** is most easily viewed in **FIG. 1E****.**

Outer section opposing sidewalls **120** extend substantially in the radial direction **R** radially inwardly from chamfered edges **118** to an outer base **122.** Center section opposing sidewalls **124** extend substantially in the radial direction **R** radially inwardly from key edges **116** to a center base **126.**

Outer sections **114** may include a step resulting from a shorter radial depth **(D1E** described below) at an outermost, exterior portion, and a longer radial depth (**D1I** described below) at an innermost, interior portion. The result is the formation of tie bars **129** within sipe/slot **110.** Tie bars **129** may act to "tie" together the two halves of block **106** that is bisected by sipe/slot **110,** resulting in increased stiffness in block **106.**

The relative dimensions and angles of sipe/slot **110** are outlined below with respect to the sipe blade **230.**

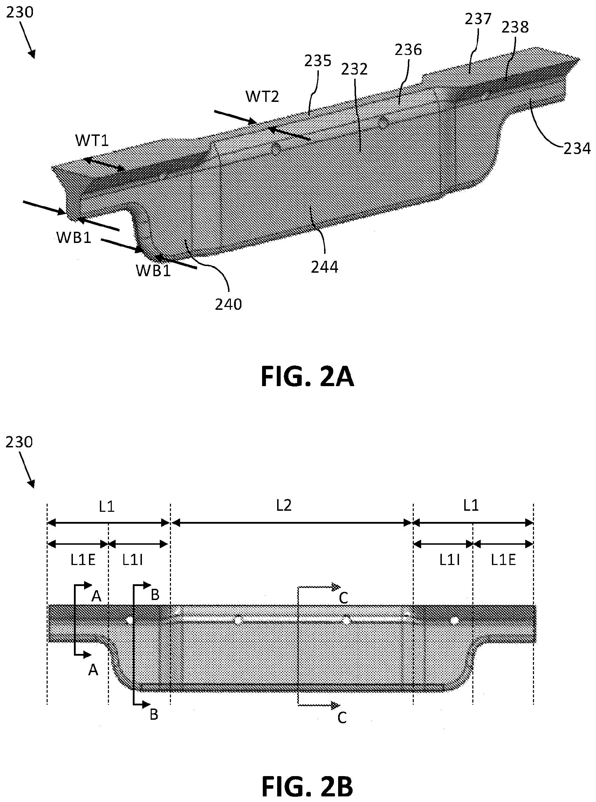

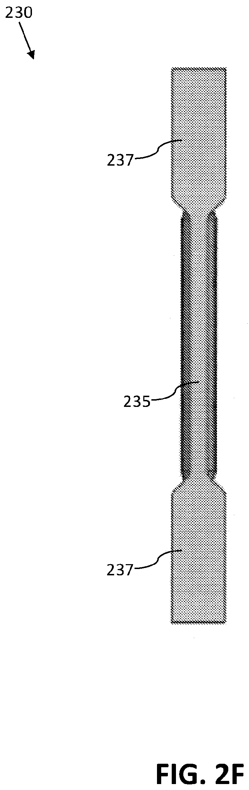

**FIGS. 2A-2F** illustrate a tire sipe/slot blade **230** for forming a bi-directional sipe and/or slot, such as sipe/slot **110.**

Blade **230** includes a center section **232** located between (e.g., axially between) opposing outer sections **234.** Center section **232** includes a top center section surface **235** and each outer section **234** includes a top outer section surface **237.**

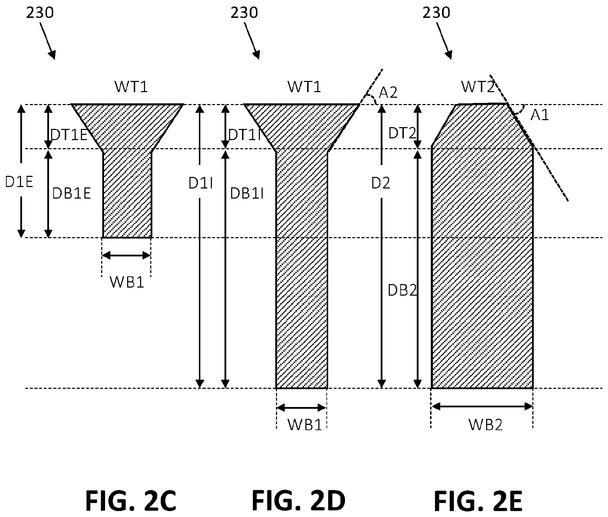

Blade **230** includes opposing key forming edges **236** limited to center section **232.** Key forming edges 236 form negative, or undercut angle (key edges **116)** with respect to the radial direction **R** at the radially outer surface of tire tread **100,** which results in block **106** having opposing, inwardly-facing acute angles (key edges **116)** at the radially outer portion. The shape of key forming edge **236** is most easily viewed in **FIGS. 2A** and **2C****-2E.**

Blade **230** includes opposing chamfered forming edges **238** limited to outer sections **234.** Chamfered forming edges **238** form a positive angle with respect to the radial direction **R** at the radial outer surface. That is, chamfered forming edge **238** are angled in the opposite direction as key forming edges **236.** The shape of chamfered forming edge **238** is most easily viewed in **FIGS. 2A** and **2C****-2E.**

Outer sections **234** include outer section opposing sidewalls **240** that form sidewalls **120.** Sidewalls **240** extend downward from chamfered forming edges **238.** Center section **232** includes center section opposing sidewalls **244** that form sidewalls **124.** Sidewalls **244** extend downward from key forming edges **236.**

Top outer section surface **237** includes a width (e.g., circumferential width) **WT1.** In one aspect, width **WT1** is between about 1.0 mm and about 3.0 mm. In another aspect, width **WT1** is between 1.0 mm and 3.0 mm. In another aspect, width **WT1** is between about 1.5 mm and about 2.5 mm. In another aspect, width **WT1** is between 1.5 mm and 2.5 mm. In another aspect, width **WT1** is between about 1.75 mm and about 2.25 mm. In another aspect, width **WT1** is between 1.75 mm and 2.25 mm. In another aspect, width **WT1** is about 2.0 mm. In another aspect, width **WT1** is 2.0 mm.

Top center section surface **235** includes a width (e.g., circumferential width) **WT2.** In one aspect, width **WT2** is between about 0.5 mm and about 2.0 mm. In another aspect, width **WT2** is between 0.5 mm and 2.0 mm. In another aspect, width **WT2** is between about 0.7 mm and about 1.8 mm. In another aspect, width **WT2** is between 0.7 mm and 1.8 mm. In another aspect, width **WT2** is between about 0.8 mm and about 1.5 mm. In another aspect, width **WT2** is between 0.8 mm and 1.5 mm. In another aspect, width **WT2** is about 1.0 mm. In another aspect, width **WT2** is 1.0 mm.

Width **WT1** is greater than width **WT2.** In one aspect, width **WT1** is about 2.0 times the value of width **WT2.** In another aspect, width **WT1** is 2.0 times the value of width **WT2.** In another aspect, width **WT1** is between 1.5 and 2.5 times the value of width **WT2.**

Sidewalls **240** are separated by a width (e.g., circumferentially) **WB1.**

Sidewalls **244** are separated by a width (e.g., circumferentially) **WB1.**

Width **WB1** is less than width **WT1.** Width **WB2** is greater than width **WT2.** Width **WB1** is less than width **WB2.** In one aspect, width **WB1** and width **WB2** are both less than width **WT1.**

In one aspect, width **WB1** is equal to width **WT2.** In another aspect, width **WB2** is equal to width **WT1.**

Each of outer sections **234** may include a length (e.g., axially) **L1.**

Each of outer sections **234** may include an outermost exterior portion having a shorter radial depth **(D1E)** and a length (e.g., axially) **L1E,** and an interior portion having a longer radial depth (**D1I**) and a length **L1I**. Length **L1** is equal to length **L1E** plus length **L1I**.

**FIG. 2C** illustrates a cross-sectional view of a tire sipe blade **230** taken about a plane formed by reference line **A-A** in **FIG. 2B****.** **FIG. 2D** illustrates a cross-sectional view of a tire sipe blade 230 taken about a plane formed by reference line **B-B** in **FIG. 2B****.** **FIG. 2E** illustrates a cross-sectional view of a tire sipe blade **230** taken about a plane formed by reference line **C-C** in **FIG. 2B****.**

Outermost exterior portion of each outer section **234** may include a total radial depth **D1E,** with chamfered forming edges **238** having a radial depth **DT1E** and sidewalls **240** having a radial depth **DB1E.** Depth **D1E** is equal to depth **DT1E** plus depth **DB1E**.

Interior portion of each outer section **234** may include a total radial depth **D1I**, with chamfered forming edges **238** having a radial depth **DT1I** and sidewalls **240** having a radial depth **DB1I.** Depth **D1I** is equal to depth **DT1I** plus depth **DB1I.**

In one aspect, radial depth **DB1E** is less than radial depth **DB1I.** In one aspect, radial depth **DT1E** is equal to radial depth **DT1I.** In another aspect, radial depths **DT1E, DT11,** and **DT2** are all equal to one another.

Center section **232** may include a total radial depth **D2,** with key forming edges **236** having a radial depth **DT2** and sidewalls **244** having a radial depth **DB2.** Depth **D2** is equal to depth **DT2** plus depth **DB2.**

In one aspect, radial depth **DB2** is greater than radial depth **DB1E**. In another aspect, depth **DB2** is equal to depth **DB1I.** In another aspect, depth **D2** is equal to depth **D1I**. In another aspect, depth **DT2** is equal to depth **DT1I.**

Center section **232** may include a length (e.g., axially) **L2.**

Key forming edges **236** include an angle **A1** relative to the axial direction. In one aspect, angle **A1** is between about 45 degrees and about 75 degrees. In another aspect, angle **A1** is between 45 degrees and 75 degrees. In another aspect, angle **A1** is between about 50 degrees and about 70 degrees. In another aspect, angle **A1** is between 50 degrees and 70 degrees. In another aspect, angle **A1** is between about 55 degrees and about 65 degrees. In another aspect, angle **A1** is between 55 degrees and 65 degrees. In another aspect, angle **A1** is about 60 degrees. In another aspect, angle **A1** is 60 degrees.

Chamfered forming edges **238** include an angle **A2** relative to the axial direction. In one aspect, angle **A2** is between about 45 degrees and about 75 degrees. In another aspect, angle **A2** is between 45 degrees and 75 degrees. In another aspect, angle **A2** is between about 50 degrees and about 70 degrees. In another aspect, angle **A2** is between 50 degrees and 70 degrees. In another aspect, angle **A2** is between about 55 degrees and about 65 degrees. In another aspect, angle **A2** is between 55 degrees and 65 degrees. In another aspect, angle **A2** is about 60 degrees. In another aspect, angle **A2** is 60 degrees.

Angle **A1** may be equal to angle **A2,** with each being relative to the axial direction **A,** but one being positive and the other being negative.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See Bryan A. Garner, A Dictionary of Modern Legal Usage 624 (2d. Ed. 1995). Also, to the extent that the terms "in" or "into" are used in the specification or the claims, it is intended to additionally mean "on" or "onto." To the extent that the term "substantially" is used in the specification or the claims, it is intended to take into consideration the degree of precision available in tire manufacturing. To the extent that the term "selectively" is used in the specification or the claims, it is intended to refer to a condition of a component wherein a user of the apparatus may activate or deactivate the feature or function of the component as is necessary or desired in use of the apparatus. To the extent that the term "operatively connected" is used in the specification or the claims, it is intended to mean that the identified components are connected in a way to perform a designated function. As used in the specification and the claims, the singular forms "a," "an," and "the" include the plural. Finally, where the term "about" is used in conjunction with a number, it is intended to include ± 10 % of the number. In other words, "about 10" may mean from 9 to 11.

As stated above, while the present application has been illustrated by the description of embodiments and aspects thereof, and while the embodiments and aspects have been described in considerable detail, it is not the intention of the applicants to restrict or in any way limit the scope of the appended claims to such detail. Additional advantages and modifications will readily appear to those skilled in the art, having the benefit of the present application. Therefore, the application, in its broader aspects, is not limited to the specific details, illustrative examples shown, or any apparatus referred to but only limited by the appended claims.

## Claims

1. A tire comprising:
a tread portion (100) comprising at least one of a tread rib or a tread block (106),
a sipe (110) included in the tread rib or the tread block (106),
wherein the sipe (110) includes a center section (112) located axially between opposing outer sections (114), and wherein the center section (112) and each outer section (114) include a radially outer portion and a radially inner portion,
wherein the radially outer portion of each outer section (114) has a circumferential width WT1,
wherein the radially outer portion of the center section (112) has a circumferential width WT2, and
wherein the radially inner portion of each outer section (114) includes an axially outer portion having a radial depth DB1E and an axially inner portion having a radial depth DB1I, and
**characterized in that**
the circumferential width WT1 is greater than the circumferential width WT2, and
the radial depth DB1E is less than the radial depth DB1I.

2. The tire of claim 1, wherein the sipe center section (112) has opposing key edges (116) on its radially outer portion.

3. The tire of claim 2, wherein the opposing key edges (116) are angled by an angle A1 relative to an axial direction of the tire, and wherein the angle A1 is 60 degrees.

4. The tire of claim 1, wherein the width WT1 is 2.0 times the value of the width WT2.

5. The tire of claim 1, wherein the width WT1 is between 1.5 and 2.5 times the value of the width WT2.

6. The tire of claim 1, wherein the radially inner portion of each outer section (114) has a circumferential width WB1, and wherein the width WB1 is less than the width WT1.

7. The tire of claim 1, wherein the radially inner portion of the center section (112) has a circumferential width WB2, and wherein the width WB2 is greater than the width WT2.

8. The tire of claim 1, wherein the radially inner portion of each outer section (114) has a circumferential width WB1, wherein the radially inner portion of the center section (112) has a circumferential width WB2, wherein the width WB1 is less than the width WB2, and wherein the width WB1 and the width WB2 are both less than the width WT1.

## Patentansprüche

1. Reifen, umfassend:
ein Laufflächenabschnitt (100), umfassend mindestens eines von einer Laufflächenrippe oder einem Laufflächenblock (106),
eine Lamelle (110), die in der Laufflächenrippe oder dem Laufflächenblock (106) eingeschlossen ist,
wobei die Lamelle (110) einen Mittelbereich (112) einschließt, der sich axial zwischen gegenüberliegenden Außenbereichen (114) befindet, und wobei der Mittelbereich (112) und jeder Außenbereich (114) einen radial äußeren Abschnitt und einen radial inneren Abschnitt einschließen,
wobei der radial äußere Abschnitt jedes Außenbereichs (114) eine umlaufende Breite WT1 aufweist,
wobei der radial äußere Abschnitt des Mittelbereichs (112) eine umlaufende Breite WT2 aufweist, und
wobei der radial innere Abschnitt jedes Außenbereichs (114) einen axial äußeren Abschnitt, der eine radiale Tiefe DB1E aufweist, und einen axial inneren Abschnitt einschließt, der eine radiale Tiefe DB1I aufweist, und
**dadurch gekennzeichnet, dass**
die umlaufende Breite WT1 größer als die umlaufende Breite WT2 ist, und
die radiale Tiefe DB1E geringer als die radiale Tiefe DB1I ist.

2. Reifen nach Anspruch 1, wobei der Lamellenmittelbereich (112) an seinem radial äußeren Abschnitt gegenüberliegende Schlüsselkanten (116) aufweist.

3. Reifen nach Anspruch 2, wobei die gegenüberliegenden Schlüsselkanten (116) um einen Winkel A1 relativ zu einer axialen Richtung des Reifens angewinkelt sind, und wobei der Winkel A1 60 Grad beträgt.

4. Reifen nach Anspruch 1, wobei die Breite WT1 das 2,0-Fache des Wertes der Breite WT2 ist.

5. Reifen nach Anspruch 1, wobei die Breite WT1 zwischen dem 1,5- und 2,5-Fachen des Wertes der Breite WT2 liegt.

6. Reifen nach Anspruch 1, wobei der radial innere Abschnitt jedes Außenbereichs (114) eine umlaufende Breite WB1 aufweist, und wobei die Breite WB1 geringer als die Breite WT1 ist.

7. Reifen nach Anspruch 1, wobei der radial innere Abschnitt des Mittelbereichs (112) eine umlaufende Breite WB2 aufweist, und wobei die Breite WB2 größer als die Breite WT2 ist.

8. Reifen nach Anspruch 1, wobei der radial innere Abschnitt jedes Außenbereichs (114) eine umlaufende Breite WB1 aufweist, wobei der radial innere Abschnitt des Mittelbereichs (112) eine umlaufende Breite WB2 aufweist, wobei die Breite WB1 geringer als die Breite WB2 ist, und wobei die Breite WB1 und die Breite WB2 beide geringer als die Breite WT1 sind.

## Revendications

1. Pneumatique comprenant :
une partie de bande de roulement (100) comprenant au moins l'un d'une nervure de bande de roulement ou d'un pavé de bande de roulement (106),
une lamelle (110) incluse dans la nervure de bande de roulement ou le pavé de bande de roulement (106),
dans lequel la lamelle (110) comporte une section centrale (112) située axialement entre des sections externes (114) opposées, et dans lequel la section centrale (112) et chaque section externe (114) comportent une partie radialement externe et une partie radialement interne,
dans lequel la partie radialement externe de chaque section externe (114) a une largeur circonférentielle WT1,
dans lequel la partie radialement externe de la section centrale (112) a une largeur circonférentielle WT2, et
dans lequel la partie radialement interne de chaque section externe (114) comporte une partie axialement externe ayant une profondeur radiale DB1E et une partie axialement interne ayant une profondeur radiale DB1I, et
**caractérisé en ce que**
la largeur circonférentielle WT1 est supérieure à la largeur circonférentielle WT2, et
la profondeur radiale DB1E est inférieure à la profondeur radiale DB1I.

2. Pneumatique selon la revendication 1, dans lequel la section centrale (112) de lamelle a des bords de clavette (116) opposés sur sa partie radialement externe.

3. Pneumatique selon la revendication 2, dans lequel les bords de clavette (116) opposés sont inclinés selon un angle A1 par rapport à une direction axiale du pneumatique, et dans lequel l'angle A1 est de 60 degrés.

4. Pneumatique selon la revendication 1, dans lequel la largeur WT1 est de 2,0 fois la valeur de la largeur WT2.

5. Pneumatique selon la revendication 1, dans lequel la largeur WT1 est comprise entre 1,5 et 2,5 fois la valeur de la largeur WT2.

6. Pneumatique selon la revendication 1, dans lequel la partie radialement interne de chaque section externe (114) a une largeur circonférentielle WB1, et dans lequel la largeur WB1 est inférieure à la largeur WT1.

7. Pneumatique selon la revendication 1, dans lequel la partie radialement interne de la section centrale (112) a une largeur circonférentielle WB2, et dans lequel la largeur WB2 est supérieure à la largeur WT2.

8. Pneumatique selon la revendication 1, dans lequel la partie radialement interne de chaque section externe (114) a une largeur circonférentielle WB1, dans lequel la partie radialement interne de la section centrale (112) a une largeur circonférentielle WB2, dans lequel la largeur WB1 est inférieure à la largeur WB2, et dans lequel la largeur WB1 et la largeur WB2 sont toutes deux inférieures à la largeur WT1.
